**Europäisches Patentamt**

**European Patent Office**

**Office européen des brevets**

(19)

(11) Veröffentlichungsnummer: **0 088 888**
**B1**

(12)

# EUROPÄISCHE PATENTSCHRIFT

(45) Veröffentlichungstag der Patentschrift:
**20.11.86**

(21) Anmeldenummer: **83101251.3**

(22) Anmeldetag: **10.02.83**

(51) Int. Cl.⁴: **F 16 C 27/06, F 16 C 23/08**

(54) Selbstausrichtende Lagerung.

(30) Priorität: **13.03.82 DE 3209203**

(43) Veröffentlichungstag der Anmeldung:
**21.09.83 Patentblatt 83/38**

(45) Bekanntmachung des Hinweises auf die Patenterteilung:
**20.11.86 Patentblatt 86/47**

(84) Benannte Vertragsstaaten:
**FR GB IT**

(56) Entgegenhaltungen:
**EP - A - 0 050 213**
**CH - A - 319 335**
**FR - A - 2 229 566**
**FR - A - 2 381 203**
**US - A - 2 618 520**
**US - A - 3 415 500**

(73) Patentinhaber: **SKF KUGELLAGERFABRIKEN GMBH,**
**Ernst-Sachs-Strasse 2-8 Postfach 1440,**
**D-8720 Schweinfurt (DE)**

(72) Erfinder: **Brandenstein, Manfred, Tränkgasse 57,**
**D-8781 Eussenheim (DE)**
Erfinder: **Kaschube, Karl-Friedrich, Bohrer-Strasse 8,**
**D-8721 Niederwerrn (DE)**
Erfinder: **Meining, Hans, Ringstrasse 6,**
**D-8721 Dittelbrunn (DE)**

(74) Vertreter: **Glanz, Werner, Dipl.-Ing.,**
**Ernst-Sachs-Strasse 2-8, D-8720 Schweinfurt (DE)**

## Beschreibung

Die Erfindung betrifft eine selbstausrichtende Lagerung mit mindestens einem Lager, insbesondere Wälzlager, dessen Innenring mit festem Sitz auf einer Welle und dessen Aussenring im Lagersitz eines Gehäuses angeordnet sind, wobei der Aussenring einen Mantel aus elastischem Werkstoff aufweist mit mindestens einem axial verlaufenden Vorsprung, der sich gegen eine Radialfläche des Lagersitzes abstützt.

Eine selbstausrichtende Lagerung dieser Art wurde schon in der europäischen Patentanmeldung EP-A-50 213 vorgeschlagen. Bei dieser Ausführung kann das Lager über den elastischen Mantel im Lagersitz des Gehäuses Kippbewegungen durchführen, um sich nach der Welle auszurichten. Weiterhin weist der Mantel im Bereich der Stirnseite des Lagers axial gerichtete Vorsprünge auf, die in sich elastisch sind und das Lager gegen eine Radialfläche des Lagersitzes anstellen. Wenn sich das Lager ausrichtet, stützt es sich über die axialen Vorsprünge ab, wodurch diese teils mehr, teils weniger zusammengepresst werden. Obwohl bei diesem Ausführungsbeispiel der obengenannten Patentanmeldung eine Ausrichtung des Lagers in bestimmten Grenzen ohne Mängel erfolgt, reicht der Bereich der Ausrichtung für einige Anwendungsfälle nicht aus. Der Grund dafür ist die zu geringe axiale Nachgiebigkeit der vorgeschlagenen axialen Vorsprünge. Das elastische Material des Mantels wird beim Ausrichten des Lagers lediglich zusammengepresst und erreicht dabei schon nach kurzer Wegstrecke die Kompressionsgrenze. Darüber hinaus steigt die dadurch bewirkte Rückstellkraft der Vorsprünge stark progressiv an, wodurch der nutzbare Bereich der Ausrichtung noch zusätzlich sehr eingeschränkt wird.

Durch die US-A-2 618 520 sind weiterhin Wälzlager bekannt, die ausgehend von einem elastischen Mantel axial gerichtete Vorsprünge aufweisen. Diese sind jedoch ringförmig geschlossen und zwischen dem Aussenring und einer Radialfläche angeordnet. Dadurch werden diese beim Einpressen bzw. Ausrichten des Wälzlagers im wesentlichen komprimiert. Auch hier treten die obengenannten Nachteile auf.

Aufgabe der Erfindung ist es, eine selbstausrichtende Lagerung zu schaffen, die sich bei annähernd gleicher Rückstellkraft der Vorsprünge in einem grösseren Bereich ausrichten kann.

Die Aufgabe wird dadurch gelöst, dass der Vorsprung derart gestaltet und angeordnet ist, dass er beim Einpressen des Wälzlagers in den Lagersitz durch Kontakt mit der Radialfläche radial nach innen verbogen wird. Im Gegensatz zum Zusammenpressen sind beim Biegen des Materials in einem grossen Biegebereich nahezu gleichbleibende Biegekräfte erforderlich. Dadurch wirken auf das Lager vorteilhafterweise in einem grossen Bereich der Ausrichtung gleichbleibende, axiale Rückstellkräfte ein. Das Lager hat dadurch nicht nur die Möglichkeit, sich in einem grossen Bereich auszurichten, sondern wird auch in der ausgerichteten Position über die sich an der Radialfläche des Lagersitzes abstützenden Vorsprünge mit am Umfang gleichmässigen Kräften rückgestellt, d.h. vorgespannt. Durch die Elastizität des verwendeten Materials, den Querschnitt, die Form und die axiale Länge der Vorsprünge kann der erwünschte Bereich der Ausrichtung des Lagers und die erforderliche Rückstellkraft der Vorsprünge in weiten Grenzen variiert werden. Bei einem Ausführungsbeispiel der Erfindung sind die Vorsprünge als geneigt zur Mittelachse des Lagers verlaufende, am Umfang verteilte Zungen ausgebildet.

Durch die schräge Anordnung der Vorsprünge bei einer Belastung in Richtung der Achse des Lagers, wie sie beim Ausrichten des Lagers durch das Abstützen gegen die Radialfläche des Lagersitzes auf die Vorsprünge einwirkt, verändert sich deren Lage, d.h. sie legen sich immer näher an die Seitenfläche des Lagers an. Dabei behalten sie weitgehend ihren Querschnitt bei; sie werden nur gegenüber dem restlichen Material des Mantels gebogen oder gekrümmt. Dieser Biegevorgang erfordert nahezu im gesamten Bereich bis zum vollständigen Anliegen der Vorsprünge gleiche Kräfte, wodurch eine gleichmässige Vorspannung des Lager in der ausgerichteten Position erzielt wird.

Bei einem anderen Beispiel der Erfindung sind die Vorsprünge axial gerichtet und deren Stirnflächen verlaufen geneigt zur Mittelachse des Lagers.

Diese Ausführung hat insbesondere bei der Fertigung Vorteile, da nach dem Ummanteln des Lagers mit Kunststoff beispielsweise im Spritzgussverfahren axial entformt werden und deshalb mit einfachen Werkzeugen gearbeitet werden kann. Die geneigt verlaufenden Stirnflächen bewirken ein seitliches Ausweichen der Vorsprünge, wenn sie beim Ausrichten oder Einsetzen des Lagers in dessen Lagersitz mit der sie stützenden Radialfläche in Berührung kommen. Dadurch werden die Vorsprünge auch bei dieser Ausführung im wesentlichen gebogen.

Nach einem weiteren Merkmal der Erfindung ist der Vorsprung als ringförmige, geneigt zur Mittelachse und am Umfang des Lagers durchgehend verlaufende Lippe ausgebildet.

Mit dieser Ausführung können bei relativ kleiner Wandstärke der Lippe grosse Rückstellkräfte erzielt werden.

Die Erfindung wird im folgenden anhand der in der Zeichnung dargestellten Beispiele beschrieben.

Es zeigen:

Fig. 1 den teilweisen Längsschnitt einer selbstausrichtenden Lagerung mit axialen, stirnseitig geneigt verlaufenden Vorsprüngen vor dem Einpressen in ein Gehäuse und

Fig. 2 den teilweisen Längsschnitt einer selbstausrichtenden Lagerung mit schräg zur Mittelachse des Lagers verlaufenden Vorsprüngen während des Einpressens und Ausrichtens des Lagers.

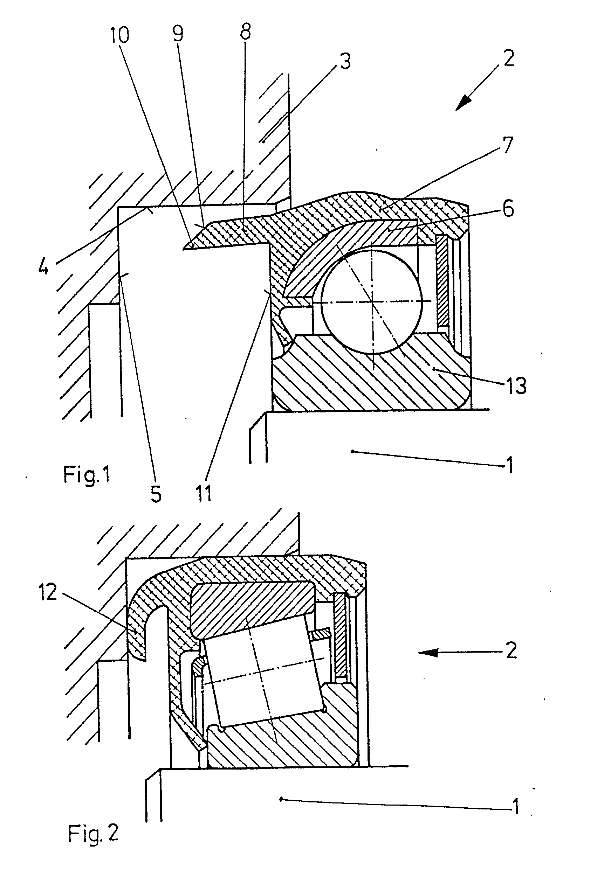

Die in Fig. 1 dargestellte selbstausrichtende Lagerung besteht aus einer Welle 1, einem darauf mit Festsitz angeordneten Kugellager 2 und einem mit einem Lagersitz für das Kugellager 2 versehenen Gehäuse 3. Der Lagersitz weist im wesentlichen eine Bohrungsfläche 4 und eine Radialfläche 5 auf. Der Aussenring 6 des Kugellagers 2 ist mit einem Mantel 7 aus elastischem Werkstoff umgeben, der stirnseitig einige am Umfang verteilte, im wesentlichen axial gerichtete Vorsprünge 8 aufweist mit geneigt zur Mittelachse des Kugellagers 2 verlaufenden Stirnflächen 9. Die Lagerung ist in einer Zusammenbauphase vor dem Einpressen dargestellt. Das Kugellager 2 muss sich beim Einpressen im Lagersitz des Gehäuses 3 nach der Welle 1 ausrichten können, wenn diese beispielsweise durch Fertigungstoleranzen der Bauteile nicht mit der Bohrungsachse des Lagersitzes fluchtet. Durch das Einpressen des Kugellagers 2 wird ein fester Sitz im Gehäuse 3 erzielt, wobei jedoch infolge des elastischen Mantels 7 keine reproduzierbare, sich streng nach den geometrischen Verhältnissen der Bauteile richtende Position des Kugellagers 2 im Gehäuse 3 erzielt wird. Das Kugellager 2 erhält auch in einer gering gegenüber der Bohrungsachse gekippten Lage einen festen Sitz, d.h. es kann sich ausrichten. Dazu tragen wesentlich die axialen Vorsprünge 8 bei, die das Kugellager 2 axial gegen die Radialfläche 5 abstützen und sich beim Einpressen verbiegen. Der Biegevorgang wird eingeleitet, wenn die Spitzen 10 der Vorsprünge 8 jeweils die Radialfläche 5 berühren und im weiteren Verlauf durch die geneigte Stirnfläche 9 zur Mittelachse des Kugellagers 2 ausweichen. Während des Biegens bleibt der Querschnitt jedes einzelnen Vorsprunges 8 erhalten und es wirkt im gesamten Biegebereich eine annähernd gleiche, axiale Rückstellkraft auf die betreffende Umfangsstelle der Seitenfläche 11 des Kugellagers 2. Dadurch wirken am Umfang gleichmässige, axiale Vorspannkräfte, wodurch eine innere Verspannung des Kugellagers 2 unterbleibt.

Die in Fig. 2 dargestellte selbstausrichtende Lagerung entspricht in ihrer wesentlichen Form der in Fig. 1 gezeigten. Das Kegelrollenlager 2 ist jedoch mit Zungen 12 versehen, die in ihrer Ruhelage (nicht dargestellt) schräg zur Mittelachse des Kugellagers 2 verlaufen. In der dargestellten Phase des Zusammenbaues sind diese schon teilweise abgebogen und haben eine exakte Ausrichtung des Kugellagers 2 zur Welle 1 bewirkt.

## Patentansprüche

1. Selbstausrichtende Lagerung mit mindestens einem Lager, insbesondere Wälzlager (2), dessen Innenring (13) mit festem Sitz auf einer Welle (1) und dessen Aussenring (6) im Lagersitz eines Gehäuses (3) angeordnet sind, wobei der Aussenring (6) einen Mantel (7) aus elastischem Werkstoff aufweist mit mindestens einem axial verlaufenden Vorsprung (8, 12), der sich gegen eine Radialfläche (5) des Lagersitzes abstützt, dadurch gekennzeichnet, dass der Vorsprung (8, 12) derart gestaltet und angeordnet ist, dass er beim Einpressen des Wälzlagers (2) in den Lagersitz durch Kontakt mit der Radialfläche (5) radial nach innen verbogen wird.

2. Selbstausrichtende Lagerung nach Anspruch 1, dadurch gekennzeichnet, dass die Vorsprünge als geneigt zur Mittelachse des Lagers (2) verlaufende, am Umfang verteilte Zungen (12) ausgebildet sind.

3. Selbstausrichtende Lagerung nach den Ansprüchen 1 oder 2, gekennzeichnet durch axial gerichtete Vorsprünge (8) mit geneigt zur Mittelachse des Lagers (2) verlaufenden Stirnflächen (9).

4. Selbstausrichtende Lagerung nach dem Anspruch 1, dadurch gekennzeichnet, dass der Vorsprung als ringförmige, geneigt zur Mittelachse und am Umfang des Lagers (2) durchgehend verlaufende Lippe ausgeführt ist.

## Claims

1. A self-aligning bearing arrangement having at least one bearing, in particular a rolling bearing (2) with an inner ring (13) mounted with tight fit on a shaft (1) and an outer ring (6) positioned in a bearing seat of a housing (3), the outer ring (6) having an outer surface (7) of elastic material provided with at least one axially extending projection (8, 12) engaging a radial surface (5) of the bearing seat, characterized in that the projection (8, 12) is executed and positioned to be radially bent inwards on engaging the radial surface (5) when the rolling bearing (2) is pressed into the bearing seating.

2. A self-aligning bearing arrangement as claimed in claim 1, characterized in that the projections are circumferentially distributed tongues (12) inclined towards the central axis of the bearing (2).

3. A self-aligning bearing arrangement as claimed in claims 1 or 2, characterized in that there are axially extending projections (8) each having an end surface (9) inclined towards the central axis of the bearing.

4. A self-aligning bearing arrangement as claimed in claim 1, characterized in that the projection is executed as a lip extending continuously about the circumference of the bearing (2) and inclined towards said central axis.

## Revendication

1. Palier à auto-alignement avec au moins un coussinet, notamment un roulement (2), dont la bague intérieure (13) est montée à serrage sur un arbre (1) et dont la bague extérieure (6) est aménagée dans le logement d'un palier (3), la bague extérieure (6) étant pourvue d'un revêtement (7) en matière élastique avec au moins une projecture axiale (8, 12) s'appuyant sur une surface radiale (5) du logement, caractérisé par le fait que la projecture (8, 12) est réalisée et aménagée de manière à être pliée radialement vers l'intérieur quand elle vient en contact avec la surface radiale (5) lors de l'emmanchement du roulement (2) dans le logement.

2. Palier à auto-alignement suivant la revendication 1, caractérisé par le fait que les projectures sont en forme de langues (12) inclinées vers l'axe du roulement (2) et reparties sur la circonférence.

3. Palier à auto-alignement suivant les revendications 1 ou 2, caractérisé par le fait qu'il y a de projectures axiales (8) ayant de surfaces latérales (9) inclinées vers l'axe du roulement (2).

4. Palier à auto-alignement suivant la revendication 1, caractérisé par le fait que la projecture est en forme de lèvre annulaire s'étendant de façon continue autour de la circonférence du roulement (2) et inclinée vers l'axe.

Fig. 1

Fig. 2